# FASCICULE DE BREVET EUROPEEN

(11) **EP 2 576 658 B1**
(45) Date de publication et mention de la délivrance du brevet: **11.07.2018**
(21) Numéro de dépôt: 11720508.8
(22) Date de dépôt: 19.05.2011
(51) Int. Cl.: C08G 69/42, C08L 77/00, C08L 77/06, F16L 9/12, B32B 27/34, F16L 11/04, C08L 23/26, C08L 61/04

(54) **POLYAMIDE MODIFIE SULFONATE AUX PROPRIETES BARRIERES AMELIOREES**
SULFONATMODIFIZIERTES POLYAMID MIT VERBESSERTEN BARRIEREEIGENSCHAFTEN
SULFONATE-MODIFIED POLYAMIDE HAVING IMPROVED BARRIER PROPERTIES

(30) Priorité: 28.05.2010 FR 1054133
(43) Date de publication de la demande: 10.04.2013
(73) Titulaire: Rhodia Operations S.A., 93306 Aubervilliers (FR)
(72) Inventeur: JEOL, Stéphane, F-69006 Lyon (FR); FILLOT, Louise-Anne, F-69120 Vaulx-en-Velin (FR)
(74) Mandataire: Schuck, Alexander
(86) Numéro de dépôt international: PCT/EP2011/058179
(87) Numéro de publication internationale: WO 2011/147739

(56) Documents cités:
- WO-A1-2005/023530
- FR-A1- 2 915 484
- US-A- 3 654 237
- US-A- 5 443 867
- US-B1- 6 353 084

## Description

La présente invention concerne l'utilisation d'un polyamide modifié par des fonctions sulfonates aux propriétés barrières améliorées. L'invention concerne plus particulièrement l'utilisation d'un composé sulfonaté, aliphatique ou aromatique, pour la fabrication d'un polyamide modifié présentant des propriétés barrières aux fluides améliorées. La composition selon l'invention comprenant le polyamide modifié est préférentiellement une composition sous forme de granulés ou de poudre, servant à la fabrication d'articles par un procédé de moulage par injection ou soufflage par extrusion.

Les polyamides techniques sont utilisés pour la réalisation de nombreux articles dans différents domaines, comme le domaine de l'automobile, où des propriétés spécifiques de rigidité, de résistance aux chocs, de stabilité dimensionnelle, en particulier à températures relativement élevées, d'aspect de surface, de densité et de poids sont particulièrement recherchées. Le choix d'un matériau pour une application donnée est généralement guidé par le niveau de performances exigées vis-à-vis de certaines propriétés et par son coût. On cherche en effet toujours de nouveaux matériaux susceptibles de répondre à un cahier des charges en terme de performance et/ou de coûts. Il est connu de l'art antérieur d'utiliser des matériaux polyamide pour la fabrication d'articles mono- ou multicouches destinés à contenir ou à transporter un fluide tel que par exemple des tubes, conduites ou réservoirs.

Toutefois, il est souvent nécessaire de procéder à des améliorations de ces matériaux pour leur conférer des propriétés barrières aux gaz ou aux liquides satisfaisantes.

Il est par exemple connu d'utiliser des tubes ou réservoirs multicouches, notamment tricouches ; chaque couche pouvant être constituée de matériaux différents pour conférer à l'ensemble les propriétés barrières et mécaniques requises selon les applications. Toutefois, de tels articles multicouches sont couteux à produire et des problèmes de délaminations peuvent survenir entre les matériaux incompatibles des différentes couches.

Il est aussi connu d'utiliser pour la diminution de la perméabilité des matrices plastiques, notamment des matrices polyamides, des nanocharges lamellaires. Une telle diminution de perméabilité est attribuée à un effet de « tortuosité » provoquée par ces nanocharges. Les nanocharges lamellaires les plus explorées aujourd'hui sont des argiles de type smectites, principalement la montmorillonite. Toutefois, il est difficile de mettre en oeuvre ces produits dans la mesure où il est nécessaire de les exfolier dans la matrice notamment en utilisant des agents d'intercalations pour obtenir des lamelles individuelles de haut facteur de forme.

Par ailleurs, il est aussi connu d'utiliser des polyamides aromatiques sulfonatés pour la fabrication de membranes permsélectives. Toutefois, les polyamides aromatiques sont très difficiles à mettre en oeuvre.

Ainsi, jusqu'à maintenant, il a été proposé dans l'art antérieur des solutions complexes, difficiles à mettre en oeuvre et coûteuses pour augmenter les propriétés barrières des matériaux plastiques; qui plus est souvent au regard des autres propriétés des matériaux plastiques tel que notamment les propriétés mécaniques et de processabilité. Il est ainsi souhaitable de mettre au point des matériaux polyamides qui permettent d'obtenir des niveaux d'imperméabilité efficaces, tout en évitant les inconvénients mentionnés précédemment.

La demande FR 2915484 concerne des matériaux polyamides à propriétés barrières aux fluides, gaz et liquides, élevées. Ces matériaux peuvent notamment être utilisés pour la fabrication d'articles destinés à contenir ou à transporter un fluide tel que notamment des tubes, conduites ou réservoirs.

Le brevet US 5443867 concerne des articles lamellaires comprenant une masse fondue hétérogène de (a) une polyoléfine, (b) une résine formant barrière comprenant un mélange d'un polymère de condensation incompatible avec la polyoléfine telle qu'un polyamide et une résine de phénol-formaldéhyde, et (c) un compatibilisant.

Ces documents ne décrivent pas de composé sulfonate.

### INVENTION

La demanderesse a mis en évidence de manière tout à fait surprenante que l'utilisation d'un « composé sulfonaté » organique aromatique ou aliphatique confère au polyamide une augmentation de ses propriétés barrières aux fluides ; au surplus sans altérer négativement les autres propriétés desdits matériaux. La solution de l'invention permet non seulement d'éviter les inconvénients connus de l'art antérieur, mais également d'obtenir des propriétés barrières aux fluides très performantes.

Les matériaux polyamides de l'invention présentent également de bonnes propriétés mécaniques, tel que par exemple un bon compromis module/choc, et/ou une tenue thermique permettant sa manipulation et son utilisation à de hautes températures.

La présente invention a pour principal objet l'utilisation d'un (co)polyamide comprenant au moins des monomères aliphatiques et éventuellement des monomères aromatiques et modifié par un composé sulfonate pour la réalisation d'articles ayant des propriétés barrières aux fluides augmentées, lesdits articles étant destinés à contenir ou à transporter un fluide tel que par exemple des tubes, conduites ou réservoirs. L'invention concerne aussi l'utilisation d'une composition comprenant au moins un (co)polyamide comprenant au moins des monomères aliphatiques et éventuellement des monomères aromatiques et modifié par un composé sulfonate pour la réalisation d'articles ayant des propriétés barrières aux fluides augmentées, lesdits articles étant destinés à contenir ou à transporter un fluide. L'invention concerne aussi l'utilisation d'un (co)polyamide comprenant au moins des monomères aliphatiques et éventuellement des monomères aromatiques et modifié par un composé sulfonate pour augmenter les propriétés barrières aux fluides d'une composition polyamide.

On entend par matériaux ou articles à propriétés barrières élevées aux fluides, un objet qui présente une perméabilité réduite vis-à-vis d'un fluide. Selon la présente invention, le fluide peut être un gaz ou un liquide. Comme gaz, on peut citer notamment l'oxygène, le dioxyde de carbone, l'hydrogène, l'hélium, l'azote, les hydrocarbures légers, tels que l'éthane, le propane, l'éthylène et le propylène, et la vapeur d'eau. Comme liquides, on peut citer les solvants apolaires, notamment les solvants représentatifs des essences tels que le toluène, l'isooctane et/ou les solvants polaires tels que l'eau et les alcools (méthanol, éthanol, ...), les réfrigérants (éthylène glycol) et les mélanges de solvants apolaires, de solvants polaires et de solvants apolaires/polaires, comme par exemple les essences alcoolisées tel que les essences de type E10 et E85. Il est à noter que les liquides peuvent présenter des viscosités variables, tels que notamment les liquides de hautes viscosité s'apparentant aux gels ou crèmes.

On entend par « composé sulfonate » un composé organique aromatique ou aliphatique comprenant au moins une fonction -SO₃X. -SO₃X représente -SO₃H ou -SO₃M ; M étant un groupement qui remplace le proton -SO₃H pour former un groupe salifié inactif. M peut notamment être choisi parmi les éléments de la classification périodique tels que les métaux alcalins, dont notamment Li, Na, K, Cs, les métaux alcalino-terreux, dont notamment Ca, Mg, Ba, les métaux de transition, dont notamment Ti, Zr, Cr, Mn, Fe, Co, Ni, Cu, Zn, Ag, les métaux pauvres, dont notamment Al, Pb, Sn, Ga, les métalloïdes, dont notamment Sb, Ge, Si, les terres rares, ou tout autre type de cation comme les ammonium NH₄⁺.

Par groupe salifié « inactif » on entend notamment un groupe salifié qui ne réagit pas avec des fonctions amine ou des fonctions acide, en particulier avec les fonctions amine et acide des monomères à l'origine du polyamide de l'invention.

M est préférentiellement un métal alcalin de préférence le sodium ou le lithium, un métal alcalino-terreux de préférence le calcium ou le magnésium, ou un métal choisi parmi le cuivre, le zinc ou l'aluminium.

On entend par « composé aromatique sulfonaté » un composé organique comprenant au moins un cycle aromatique, tel qu'un benzène par exemple, ledit cycle aromatique portant au moins une fonction sulfonaté -SO₃X. La fonction sulfonate étant préférentiellement rattachée à un atome de carbone faisant partie du cycle aromatique.

Le composé sulfonaté peut se lier chimiquement à la chaine polyamide de diverses manières. Le composé sulfonaté, une fois lié chimiquement à la chaîne polyamide peut être considéré comme une unité sulfonate rattachée. Par exemple, il peut se lier chimiquement à la chaîne polyamide de manière à former une liaison covalente par l'intermédiaire de fonctions pouvant réagir avec les fonctions amines ou acides carboxyliques des monomères du polyamide telles les fonctions amine, acide carboxylique, aldéhyde, anhydride, hydroxyle, cétone ou leurs dérivés. Ces fonctions sont portées ou non par la structure aromatique du composé aromatique sulfonaté.

Cette liaison covalente est préférentiellement une liaison de type amide mais peut également être une fonction imine lorsque la ou les fonctions réactives du composé aromatique sulfonaté est un aldéhyde ou une cétone, une fonction imide lorsque la ou les fonctions réactives du composé aromatique sulfonaté est un anhydride ou un diacide vicinal, ou une fonction ester lorsque la ou les fonctions réactives du composé aromatique sulfonaté est un hydroxyle.

Par ailleurs, les groupements sulfonate sont capables d'interagir par des liaisons non covalentes mais de haute énergie (liaisons H et/ou ioniques et/ou complexation métallique notamment) avec un ou plusieurs éléments du polyamide tels des fonctions amine et acide résiduelles en extrémités de chaînes, des fonctions amide centrales, d'autres groupements sulfonate ou encore avec d'autres éléments présents dans le polyamide (hétéroatomes comme, par exemple, des fonctions hydroxyle, éther, amine secondaire ou tertiaire,...).

En fonction du nombre de ses fonctions pouvant réagir avec les fonctions amide ou acide carboxylique du polyamide, le composé de l'invention peut être placé dans la chaine polymère du polyamide ou alors en bout de chaine du polymère. Le composé sulfonaté porte préférentiellement soit une ou plusieurs fonctions amine primaire et/ou une ou plusieurs fonctions acide carboxylique ou dérivées, telles que chlorure d'acide, ester ou anhydride.

Le composé sulfonaté de l'invention, qui sera lié chimiquement à la chaîne polymère du polyamide, peut notamment être représenté par la formule générale (I) :

**(Z)ₙ-Y-(SO₃X)ₘ** **(I)**

dans laquelle :
- -SO₃X représente -SO₃H ou -SO₃M ; M étant un groupement qui remplace le proton -SO₃H pour former un groupe salifié inactif ;
- m est compris entre 1 et 10 et préférentiellement égal à 1, 2 ou 3.
- Y est un radical hydrocarboné comprenant de 2 à 100 atomes de carbone, linéaire ou cyclique, aromatique ou aliphatique et pouvant comprendre des hétéroatomes.
- Z est une fonction pouvant réagir avec les fonctions amines ou acides carboxyliques des monomères du polyamide
- n est compris entre 1 et 10 et préférentiellement égal à 1, 2 ou 3.

Des mélanges de composés de formule (I) peuvent notamment être utilisés pour la réalisation d'un polyamide modifié.

Y comprend préférentiellement de 1 à 24 atomes de carbone. Y est préférentiellement un radical hydrocarboné aromatique multivalent. Y est plus préférentiellement un radical pouvant comporter notamment de 6 à 18 atomes de carbone. Le radical Y peut être éventuellement substitué, notamment de nature arylaliphatique. Le radical Y est préférentiellement un radical benzène ou naphtalène éventuellement substitué par des groupements alkyles ; et pouvant également contenir des hétéroatomes tels que l'oxygène ou le soufre.

Z est préférentiellement choisi parmi -COHal (Hal signifie halogène), -COOR,-COONRR', -CO-R, -NH₂, R et R', identiques ou différents, étant un atome d'hydrogène ou un radical alkyle, linéaire ou branché, comprenant préférentiellement de 1 à 18 atomes de carbone, plus préférentiellement de 1 à 4 atomes de carbone.

Le composé de formule (I) est notamment choisi parmi le groupe comprenant : l'acide sodium 5-sulfoisophthalique, l'acide lithium 5-sulfoisophtalique, l'acide potassium 5-sulfoisophtalique, le sodium-4-carboxybenzène sulfonate, le sodium-3-carboxybenzène sulfonate, le sodium-2-carboxybenzène sulfonate, le lithium-3-carboxybenzène sulfonate, le potassium-3- carboxybenzène sulfonate, le sodium-3-carbométhoxybenzène sulfonate, le potassium-2-carbopropoxybenzène sulfonate, le sodium-2-carbométhoxyéthylbenzène sulfonate, le potassium-3-aminométhylbenzène sulfonate, le sodium-2-aminoéthylbenzène sulfonate et le potassium-3-aminopropylbenzène sulfonate.

Il est également possible que le composé sulfonaté ne soit pas lié chimiquement aux chaines du polyamide. On peut notamment citer à cet effet l'acide 1,3,(6,7)-naphthalènetrisulfonique ou un de ses sels, tel que le sel de sodium (RN CAS : 123409-01-8).

Le polyamide modifié selon l'invention comprend généralement de 0,1 à 70 % molaire d'unité sulfonate par rapport au nombre total de moles d'unités constituant la chaîne polymérique, notamment d'unités diacide ou diamine et/ou d'unités aminoacide dans la chaîne polymérique, préférentiellement de 1 à 50 %, plus préférentiellement de 5 % à 30 %. Par mole d'unité diacide ou par mole d'unité diamine, on entend dans le cas de la mise en oeuvre d'un mélange diacide/diamine, une mole de diacide et une mole de diamine mises en oeuvre pour préparer le polyamide, en d'autres termes on entend une mole du sel diacide/diamine mise en oeuvre pour la préparation du polyamide. Par mole d'unité aminocarboxylique acide, on entend une mole d'aminoacide ou une mole de lactame mise en oeuvre pour préparer le polyamide. Dans le cas de la mise en oeuvre d'un mélange diamine/diacide, si l'un des deux monomères (diacide ou diamine) est utilisé en excès par rapport à l'autre, on réalise le calcul de la proportion molaire d'unité contenant un groupement sulfonate par rapport au nombre de moles d'unités issues du monomère excédentaire.

Selon la présente invention, le polyamide modifié comprenant un composé sulfonaté lié chimiquement à la chaîne polymère du polyamide peut être obtenu de diverses manières.

On peut le fabriquer par ajout du composé sulfonaté en polymérisation à l'état fondu du polyamide, c'est à dire à l'état liquide, en présence des monomères du polyamides. On peut également ajouter le composé sulfonaté en mélange à chaud avec le polyamide formé ou partiellement formé, par exemple dans une l'extrudeuse. On peut également ajouter le composé sulfonaté en phase solide, notamment lors d'une post-condensation. On peut également pour certains polyamides procéder à l'ajout du composé sulfonaté lors de la polymérisation en solution.

On préfère notamment la fabrication du polyamide modifié de l'invention par polymérisation à l'état fondu, c'est à dire à l'état liquide. Le milieu de polymérisation peut par exemple être une solution aqueuse comprenant les monomères, ou un liquide comprenant les monomères, notamment de l'eau. Le polyamide modifié de l'invention est généralement obtenu par polycondensation entre les monomères du polyamide et le composé aromatique sulfonaté, pour former des chaînes polyamides, avec formation du produit d'élimination, en particulier l'eau, dont une partie peut se vaporiser. Le composé sulfonaté peut être ajouté au début, au milieu ou en fin de polymérisation du polyamide, et en présence ou non d'une quantité de diamine ou diacide pour assurer une parfaite stoechiométrie des fonctions réactives. Cet ajustement de la stoechiométrie permet de moduler la taille de la chaîne du polyamide modifié.

Le polyamide modifié de l'invention est généralement obtenu, par chauffage à température et pression élevées, par exemple d'une solution aqueuse comprenant les monomères, ou d'un liquide comprenant les monomères, pour évaporer le produit d'élimination, en particulier l'eau présente initialement dans le milieu de polymérisation et/ou formée lors de la polycondensation tout en évitant toute formation de phase solide afin d'éviter une prise en masse. La polycondensation est généralement poursuivie en phase fondue à pression atmosphérique ou réduite de manière à atteindre le degré d'avancement souhaité.

Le produit de polycondensation peut également subir une étape de post-condensation en phase solide. Cette étape est connue de l'homme du métier et permet d'augmenter le degré de polycondensation à une valeur souhaitée.

Un limiteur de chaîne peut également être utilisé pour moduler la taille de la chaîne du polyamide modifié. Ce limiteur de chaîne peut porter des fonctions non chimiquement réactives avec le polyamide. Des exemples non limitatifs de limiteurs de chaîne sont l'acide acétique, l'acide benzoïque.

Un catalyseur peut également être utilisé pour augmenter la cinétique de réaction. Des exemples non limitatifs de catalyseur de synthèse des polyamides sont par exemple l'acide phosphorique, l'acide phosphoreux, l'hypophosphite de sodium, le BPO et le BPI.

Le procédé de l'invention est similaire dans ses conditions au procédé classique de préparation de polyamides ou copolyamides semi-cristallins.

Le polyamide modifié selon l'invention peut notamment comprendre au moins une unité contenant un groupement sulfonate de formule (II) suivante :

**-L-Y-(SO₃X)ₘ** **(II)**

dans laquelle :
- -L est un radical issu de la condensation de deux fonctions réactives dont une des fonctions réactives est Z ; et
- Y, X, Z et m sont définis précédemment.

Le polyamide selon la présente invention est un (co)polyamide comprenant au moins des monomères aliphatiques et éventuellement des monomères aromatique. Les monomères aliphatiques peuvent être notamment des diacides aliphatiques, des diamines aliphatiques ou des aminoacides aliphatiques. On peut notamment citer l'hexaméthylène diamine, la 2-méthyl-1,5-pentanediamine (M), la putrescine, la cadavérine, la 1,10-diaminodecane, l'acide adipique, l'acide pimellique ; l'acide azélaique, l'acide sébacique, l'acide 1,12-dodécandioique, l'acide aminocaproique, le caprolactame, l'acide 11-amino undécanoïque, et l'acide 12-amino dodécanoïque. Les monomères aromatiques peuvent être notamment des diacides aromatiques tels que l'acide téréphtalique et l'acide isophtalique.

On entend par polyamide au sens de l'invention un polymère comprenant au moins 51 % en mole de monomères diamines ou diacides ou aminoacides ou lactames et résultant de la réaction de polymérisation de fonctions acides et amines formant lesdites fonctions amides. Le polyamide peut également comprendre d'autres fonctions, telles que des fonctions ester et/ou éther, par exemple.

Selon un mode de réalisation préférentiel de l'invention, le polyamide modifié est un polyamide de type polyamide 6, polyamide 66, polyamide 10, polyamide 11, le polyamide 610, le polyamide 1010, le polyamide 12, le polyamide 6I, les copolyamides 66/6T, 66/6I, 6T/MT (M=2-méthyl pentane diamine), 6T/6I de différentes proportions molaires, et les mélanges et copolymères à base de ces polyamides.

La composition de l'invention peut également comprendre les copolyamides dérivés notamment des polyamides ci-dessus, ou les mélanges de ces polyamides ou copolyamides.

Les polyamides préférés sont le polyhexaméthylène adipamide, le polycaprolactame, ou les copolymères et mélanges entre le polyhexaméthylène adipamide et le polycaprolactame.

On utilise généralement des polyamides de poids moléculaires adaptés aux procédés de moulage par injection ou l'extrusion soufflage, bien que l'on puisse utiliser aussi des polyamides de plus faibles ou plus hautes viscosités.

Le polyamide modifié peut notamment être un polymère comprenant des chaînes macromoléculaires étoiles ou H, branché, ramifié, hyper-ramifié, et le cas échéant des chaînes macromoléculaires linéaires. Les polymères comprenant de telles chaînes macromoléculaires étoiles ou H sont par exemple décrits dans les documents FR2743077, FR2779730, US5959069, EP0672703, EP0682057 et EP0832149.

Le polyamide modifié peut être un polymère de type arbre statistique, de préférence un copolyamide présentant une structure arbre statistique. Ces copolyamides de structure arbre statistique ainsi que leur procédé d'obtention sont notamment décrits dans le document WO99/03909. La matrice de l'invention peut également être une composition comprenant un polymère thermoplastique linéaire et un polymère thermoplastique étoile, H et/ou arbre tels que décrits ci-dessus. La matrice de l'invention peut également comprendre un copolyamide hyperbranché du type de ceux décrits dans le document WO 00/68298. La composition de l'invention peut également comprendre toute combinaison de polymère thermoplastique linéaire, étoile, H, arbre, copolyamide hyperbranché tel que décrit ci-dessus.

La composition selon l'invention présente préférentiellement au moins 30 % en poids de polyamide, notamment de 30 à 95 % en poids de polyamide, préférentiellement de 40 à 80 % en poids, par rapport au poids total de la composition.

La composition peut également comprendre, selon la propriété finale souhaitée, un mélange de polyamide modifié selon l'invention et un ou plusieurs autres polymères, tel que par exemple du polyamide, du polyester, des polyoléfines, du polystyrène, de la résine ABS, du polycarbonate, du sulfure de polyphénylène, de l'oxyde de polyphénylène, du polyacétal, du polysulfone, de la polyéthersulfone, du polyétherimide, de la polyéthercétone, une résine d'acide polylactique, une résine de polysulfone, une résine élastomère ou des mélanges de ceux-ci.

La composition peut comprendre des charges de renfort ou de remplissages, tels que par exemple des charges fibreuses et/ou des charges non fibreuses.

Comme charges fibreuses on peut citer les fibres de verre, les fibres de carbone, les fibres naturelles, les fibres d'aramides, et les nanotubes, notamment de carbone. On peut citer comme fibres naturelles le chanvre et le lin. Parmi les charges non fibreuses on peut notamment citer toutes les charges particulaires, lamellaires et/ou les nanocharges exfoliables ou non exfoliables comme l'alumine, le noir de carbone, les argiles alumino-silicates, les montmorillonites, le phosphate de zirconium, le kaolin, le carbonate de calcium, les diatomées, le graphite, le mica, la silice, le dioxyde de titane, les zéolites, le talc, la wollastonite, les charges polymériques telles que, par exemple, des particules de diméthacrylates, les billes de verre ou de la poudre de verre.

Il est parfaitement possible selon l'invention que la composition comprenne plusieurs types de charges de renfort. De façon préférentielle, la charge la plus utilisée peut être les fibres de verres, du type dit coupé (chopped), notamment ayant un diamètre compris entre 7 et 14 µm. Ces charges peuvent présenter un ensimage surfacique qui assure l'adhésion mécanique entre les fibres et la matrice polyamide.

La concentration pondérale des charges de renfort ou de remplissage est comprise avantageusement entre 1 % et 60 % en poids par rapport au poids total de la composition, de préférence entre 15 et 50 %.

La composition selon l'invention peut en outre comprendre des additifs classiquement utilisés pour la fabrication de compositions polyamides. Ainsi, on peut citer les lubrifiants, les agents ignifugeants, les plastifiants, les agents nucléants, les agents modificateurs de chocs, les catalyseurs, les stabilisants lumière et/ou thermique, les antioxydants, les antistatiques, les colorants, les matifiants, les additifs d'aide au moulage ou autres additifs conventionnels.

On peut notamment ajouter à la composition polyamide des agents modifiants la résistance aux chocs. Ce sont généralement des polymères d'élastomères qui peuvent être utilisés à cet effet. Les agents modificateurs de la résilience sont généralement définis comme ayant un module de traction ASTM D-638 inférieur à environ 500 MPa. Des exemples d'élastomères convenables sont les éthylène-ester acrylique-anhydride maléïque, les ethylène-propylène-anhydride maléïque, les EPDM (ethylène-propylène-diène momonère) avec éventuellement un anhydride maléïque greffé, et les ionomères. La concentration pondérale en élastomère est avantageusement comprise entre 0,1 et 30 % par rapport au poids total de la composition.

On préfère notamment les agents modificateurs de chocs comprenant des groupements fonctionnels réactifs avec le polyamide. On peut par exemple citer les terpolymères d'éthylène, ester acrylique et glycidyl méthacrylate, les copolymères d'éthylène et de butyl ester acrylate, les copolymères d'éthylène, n-butyl acrylate et glycidyl méthacrylate, les copolymères d'éthylène et d'anhydride maléique, les copolymères styrène-maléïmides greffés avec de l'anhydride maléique, les copolymères styrène-éthylène-butylène-styrène modifié avec de l'anhydride maléique, les copolymère styrène-acrylonitrile greffés anhydrides maléiques, les copolymères acrylonitrile butadiène styrène greffés anhydrides maléiques, et leurs versions hydrogénées. La proportion en poids de ces agents dans la composition totale est notamment comprise entre 0,1 et 40 %.

Ces charges et additifs peuvent être ajoutés au polyamide modifié par des moyens usuels adaptés à chaque charge ou additif, tel que par exemple lors de la polymérisation ou en mélange en fondu.

La composition polyamide peut éventuellement comprendre une résine novolaque. Les résines novolaques sont généralement des produits de condensation de composés phénoliques avec des aldéhydes ou cétones. Ces réactions de condensation sont généralement catalysées par un acide ou une base.

On entend généralement par résine novolaque, une résine phénolique dont le rapport formaldéhyde/phénol est inférieur à 1 et qui, de ce fait, reste normalement thermoplastique jusqu'à ce qu'elle soit chauffée avec une quantité appropriée d'un composé, par exemple formaldéhyde ou hexaméthylènetétramine, susceptible de donner des liaisons supplémentaires, par conséquent de donner un produit infusible.

Le polyamide selon l'invention peut comprendre une ou plusieurs types de résine novolaque différentes.

Les résines novolaques présentent généralement un degré de condensation compris entre 2 et 15.

Les composés phénoliques peuvent être choisis seuls ou en mélange parmi le phénol, le crésol, le xylénol, le naphtol, les alkylphénols, comme le butyl-phénol, le terbutyl-phénol, l'isooctyl-phénol, le nitrophénol, le phénylphénol, le résorcinol ou le biphénol A ; ou tout autre phénol substitué.

L'aldéhyde le plus fréquemment utilisé est le formaldéhyde. On peut toutefois en utiliser d'autres, tels que l'acétaldéhyde, le para-formaldéhyde, le butyraldéhyde, le crotonaldéhyde, le glyoxal, et le furfural. Comme cétone, on peut utiliser l'acétone, la méthyle éthyle cétone ou l'acétophénone. L'aldéhyde et/ou la cétone peuvent éventuellement porter un autre groupement fonctionnel, tel que par exemple une fonction acide carboxylique. On peut notamment citer à cet effet l'acide glyoxylique ou l'acide lévulinique.

Selon un mode de réalisation particulier de l'invention, la résine novolaque est un produit de condensation du phénol et du formaldéhyde.

Les résines novolaques utilisées ont avantageusement un poids moléculaire compris entre 500 et 3000 g/mol, de préférence entre 800 et 2000 g/mol. Comme résine novolaque commerciale, on peut citer notamment les produits commerciaux Durez®, Vulkadur® ou Rhenosin®.

Les matériaux et compositions de l'invention sont généralement obtenus par mélange des différents constituants à chaud, par exemple dans une extrudeuse mono ou bivis, à une température suffisante pour maintenir la résine polyamide en milieu fondu ; ou à froid dans un mélangeur mécanique notamment. Généralement, le mélange obtenu est extrudé sous forme de joncs qui sont coupés en morceaux pour former des granulés. Les composés peuvent être ajoutés à n'importe quel moment du processus de fabrication du matériau plastique, notamment par mélange à chaud ou à froid avec la matrice plastique. L'addition des composés et des additifs peut être réalisée par ajout de ces composés dans la matrice plastique fondue sous forme pure ou sous forme de mélange concentré dans une matrice telle que par exemple une matrice plastique. Les granulés obtenus sont alors généralement utilisés comme matière première pour alimenter les procédés de fabrication d'articles tels que les procédés d'injection, d'extrusion, d'extrusion-soufflage.

L'invention divulgue également des articles obtenus par mise en forme de la composition de l'invention, par toute technique de transformation plastique, comme par exemple par extrusion, tel que par exemple extrusion de feuilles et films ou extrusion soufflage ; par moulage tel que par exemple moulage par compression, moulage par thermoformage ou par rotomoulage ; par injection tel que par exemple par moulage par injection ou par injection soufflage.

L'invention divulgue tout particulièrement des articles du type de ceux contenant ou transportant un fluide, comprenant au moins une partie à base d'une composition telle que décrite précédemment. Ce sont donc généralement des corps creux ou des films et articles d'emballages. Ces articles sont notamment choisi dans le groupe comprenant : les réservoirs, les containers, les cuves, les bouteilles, les boites, les tubes, les tuyaux, les conduites, les éléments de pompes, ou dérivés.

La composition ou matériau selon la présente invention peut être déposé ou associé avec un autre substrat, tel que des matériaux plastiques pour la fabrication d'articles, notamment multicouches. Ce dépôt ou cette association peut se faire par les méthodes connues de co-extrusion, de lamination, d'enduction, de surmoulage, de co-injection, d'injection soufflage multicouche, ou de soudage. Des structures multicouches peuvent être formées d'une ou de plusieurs couches de matériau selon l'invention. Ces couches peuvent être associées notamment par des couches de liant de co-extrusion à une ou plusieurs autres couches d'un ou de plusieurs polymères thermoplastiques, par exemple les polyoléfines comme le polyéthylène et le polypropylène, le polychlorure de vinyle, le polyéthylène téréphtalate, le polytriméthylène téréphtalate, le polybutylène téréphtalate le MXD6, le PA 11, le PA 12, le PA 6.10, le PA 6.12, le polyfluorovinylidène (PVDF), le polyphénylène sulfide (PPS), le copolymère éthylène-alcool vinylique (EVOH), les copolymères PA 6/6.36, 6/6.9, 6/6.10.

Les films ou feuilles ainsi obtenus peuvent être mono-étirés ou bi-étirés selon les techniques connues de transformation des thermoplastiques. Les feuilles ou les plaques peuvent être découpées, thermoformées et/ou estampées afin de leur donner la forme voulue.

Un langage spécifique est utilisé dans la description de manière à faciliter la compréhension du principe de l'invention. Des modifications, améliorations et perfectionnements peuvent notamment être envisagés par une personne au fait du domaine technique concerné sur la base de ses propres connaissances générales. Le terme et/ou inclut les significations et, ou, ainsi que toutes les autres combinaisons possibles des éléments connectés à ce terme. D'autres détails ou avantages de l'invention apparaîtront plus clairement au vu des exemples donnés ci-dessous uniquement à titre indicatif.

### PARTIE EXPERIMENTALE

### Caractérisations

### Analyse des propriétés physico-chimiques :

Teneurs en groupements terminaux acide (GTC) et amine (GTA) : dosées par potentiométrie, exprimées en meq/kg.

Lorsque le composé sulfonaté est un monosulfonate monofonctionnel, on peut calculer la teneur en groupements terminaux sulfonate (GTS) à partir des quantités de réactifs introduits dans le réacteur de polymérisation.

Masse molaire moyenne en nombre Mn déterminée par la formule Mn=2.106/(GTA+GTC+GTS) et exprimées en g/mol.

Lorsque le composé sulfonaté est un monosulfonate monofonctionnel, on peut calculer le nombre d'extrémités de chaîne sulfonate par chaine de la manière suivante : Nsulfonate/chaîne=GTS/((GTA+GTC+GTS)/2).

### Analyse des propriétés thermiques :

Pour les granulés préparés en synthèse : les températures de fusion (Tf) et enthalpies associées (ΔHf), températures de cristallisation au refroidissement (Tc) sont déterminées par calorimétrie différentielle à balayage (DSC « Differential Scanning Calorimetry »), à l'aide d'un appareil Perkin Elmer Pyris 1, à une vitesse de 10°C/min. Le taux de cristallinité est obtenu par le calcul χc=ΔHf/ΔHf°, avec ΔHf° l'enthalpie de fusion d'un cristal pur de polyamide (ΔHf°(PA66)=188J/g).

Température de transition vitreuse (Tg) déterminées sur le même appareil à une vitesse de 40 °C/min. Les valeurs sont données pour des produits secs.

Pour les objets transformés (films, plaques injectées) : les températures de fusion (Tf), cristallisation au refroidissement (Tc) et température de transition vitreuse (Tg) des films obtenus sont déterminées par calorimétrie différentielle à balayage (DSC « Differential Scanning Calorimetry »), à l'aide d'un appareil TA Instruments Q2000, à une vitesse de 10°C/min. Le taux de cristallinité est obtenu par le calcul Xc=ΔHf/ΔHf°, avec ΔHf l'enthalpie de fusion de l'échantillon de polyamide testé et ΔHf° l'enthalpie de fusion d'un cristal pur de polyamide (ΔHf°(PA66)=188J/g). Les valeurs sont données pour des produits secs.

### Analyse de la perméabilité aux essences :

Des films extrudés, pièces injectées ou soufflées sont soit séchés à 110°C sous vide pendant une nuit soit conditionnés à 23°C à un degré d'hygrométrie de 50% (RH50) jusque qu'à ce que leur reprise en eau atteigne un équilibre.. La perméabilité à l'essence (par exemple essence E10 comportant 10% en volume d'éthanol, 45% d'iso-octane et 45% de toluène) est ensuite évaluée : une des faces du film est placée en contact avec l'essence à l'aide de coupelles de perméation en aluminium scellées de façon étanche, et la masse de l'ensemble (coupelle+film+essence) est mesurée au cours du temps. Au bout d'un certain temps appelé temps d'induction, une perte de masse correspondant à la perméation de l'essence à travers le film de polymère est mesurée, et une valeur de perméabilité représentant cette perte de masse rapportée au temps, à la surface de film et multipliée par l'épaisseur de film peut être établie (Perméabilité P exprimée en g.mm/m².J).

La perméabilité des films à l'essence est mesurée à 28°C et/ou à 40°C en plaçant les coupelles de perméation dans des étuves ventilées thermo-régulées à 28°C ou 40°C. Les étuves ventilées étant placées dans une pièce régulée à 23°C à RH50, les degrés d'hygrométrie dans l'étuve sont à 28°C et à 40°C respectivement de 40% et 20%.

### Exemple 1 comparatif : synthèse d'un PA 66 non modifié

Dans un réacteur de polymérisation sont introduits 92,6 kg (353 mol) de sel N (sel 1:1 d'hexaméthylène diamine et d'acide adipique), 84 kg d'eau déminéralisée et 6,4 g d'agent antimousse Silcolapse 5020®. Le polyamide 66 est fabriqué selon un procédé standard de polymérisation de type polyamide 66, avec 30 minutes de finition. Le polymère obtenu est coulé sous forme de jonc, refroidi et mis sous forme de granulé par coupe des joncs.

Le polymère obtenu présente les caractéristiques suivantes : GTC = 70,2 meq/kg, GTA = 51,5 meq/kg, Mn = 16430 g/mol.

Le polyamide 66 est semi-cristallin et a les caractéristiques thermiques suivantes : Tg= 70,6 °C, Tc= 230,9 °C, Tf= 263,7 °C, ΔHf = 68,4 J/g soit χc=36,4%.

### Exemple 1 : synthèse d'un polyamide 66 sulfonate PA 66/6AlSLi 95/5

Dans un réacteur de polymérisation sont introduits 85,9 kg (327,5 mol) de sel N (sel 1:1 d'hexaméthylène diamine et d'acide adipique), 4657 g de sel de lithium d'acide 5-sulfoisophtalique à 93,33% (AlSLi) (17,24 mol), 6435 g d'une solution d'hexaméthylène diamine (HMD) en solution dans l'eau à 32,47 % en poids (17,98 mol) et 81,2 kg d'eau déminéralisée et 6,4 g d'agent antimousse Silcolapse 5020®. Le polyamide 66 sulfonate est fabriqué selon un procédé standard de polymérisation de type polyamide 66, avec 30 minutes de finition à pression atmosphérique. Le polymère obtenu est coulé sous forme de jonc, refroidi et mis sous forme de granulé par coupe des joncs.

Le polymère obtenu présente les caractéristiques suivantes: GTC =102,6 meq/kg, GTA = 94,3 meq/kg, Mn = 10160 g/mol.

Le polyamide 66 sulfonate PA 66/6AlSLi 95/5 est semi-cristallin et a les caractéristiques thermiques suivantes : Tg= 92,5°C, Tc= 215,4°C, Tf= 254,5 °C, ΔHf = 56,7 J/g soit χc=30,2%. Le polyamide sulfonate, malgré une plus faible masse molaire, a une Tg largement supérieure d'environ 22 °C par rapport à celle du PA 66 tout en diminuant le taux de cristallinité de seulement 17%.

### Exemple 2 : synthèse d'un polyamide 66 sulfonate PA 66/6AlSLi 90/10

Dans un réacteur de polymérisation sont introduits 128,98 g (0,492 mol) de sel N (sel 1:1 d'hexaméthylène diamine et d'acide adipique), 14,77 g de sel de lithium d'acide 5-sulfoisophtalique à 93,33% (AlSLi) (0,0547 mol), 21,2 g d'une solution d'hexaméthylène diamine (HMD) en solution dans l'eau à 32,5 % en poids (0,0593 mol) et 122,73 g d'eau déminéralisée et 2 g d'une solution aqueuse d'agent antimousse. Le polyamide sulfonate 66/6AlSLi 90/10 est fabriqué selon un procédé standard de polymérisation de type polyamide 66, avec 45 minutes de finition à pression atmosphérique. Le polymère obtenu est coulé sous forme de jonc, refroidi et mis sous forme de granulé par coupe des joncs.

Le polymère obtenu présente les caractéristiques suivantes: GTC =138,7 meq/kg, GTA =114,6 meq/kg, Mn = 7900 g/mol.

Le polyamide sulfonate 66/6AlSLi 90/10 est semi-cristallin et a les caractéristiques thermiques suivantes : Tg= 99,5 °C, Tc= 175,4 °C, Tf= 242,3 °C, ΔHf = 41 J/g soit χc=21,8%. Le polyamide sulfonate, malgré une plus faible masse molaire, a une Tg largement supérieure d'environ 29 °C par rapport à celle du PA 66 pour une diminution du taux de cristallinité du PA 66 de 40 %.

### Exemple 3 : préparation de films de PA 66 et de PA 66 fonctionnalisé sulfonate PA 66/6AlSLi 95/5 et mesure de la perméabilité à l'essence E10

Les granulés de PA 66 de l'exemple comparatif 1 ou de PA 66/6AlSLi 95/5 de l'exemple 1 sont introduits dans une extrudeuse bi-vis corotative Leistritz (D=34, L/D=35), la vitesse de vis étant 255 tours/minute et la température 280°C. Une filmeuse OCS comportant une filière plate (largeur 300, écartement 500µm) permet d'obtenir au final des films d'épaisseur 300µm, le film en sortie de filière étant étiré à une vitesse de 2 m/minute, la température du rouleau de refroidissement étant de 135°C.

Les films obtenus présentent les caractéristiques thermiques suivantes :
PA 66 : Tg = 56°C, Tf = 260°C, Tc = 231 °C, χc = 37%
PA 66/6AlSLi 95/5 : Tg = 78°C, Tf = 251°C, Tc = 221°C, χc = 34%,

Avant d'évaluer la perméabilité, les films sont conditionnés à RH50 à 23°C jusqu'à ce que leur reprise en eau atteigne un équilibre (reprise en eau de 3,2% pour le PA6,6 et 3,8% pour le PA66/6AiSLi 95/5).
- A 28°C, la perméabilité du PA 66 à l'essence E10 est de 1,56 g.mm/m².J, tandis que la perméabilité du PA66/6AlSLi 95/5 est de 0,55 g.mm/m².J (soit une diminution de la perméabilité de 65%).
- A 40°C, la perméabilité du PA 66 à l'essence E10 est de 1,92 g.mm/m².J, tandis que la perméabilité du PA66/6AlSLi est de 0,83 g.mm/m².J (soit une diminution de la perméabilité de 57%).

Ainsi, le PA 66/6AlSLi 95/5, malgré un taux de cristallinité plus faible que celui du PA 66, présente une perméabilité à l'essence E10 environ 2,5 fois plus faible que celle du PA 66.

A 40°C, la perméabilité du PA 66 à l'essence E100 (éthanol pur) est de 5,44 g.mm/m².J, tandis que la perméabilité du PA66/6AlSLi 95/5 est de 1,35 g.mm/m².J (soit une diminution de la perméabilité de 75%).

### Exemple 4 : formulations, injection de plaques et mesure de la perméabilité à l'essence E10

Avant extrusion, les polyamides sont séchés à une teneur en eau inférieure à 1000 ppm. Des formulations sont réalisées par mélange des différents composants et additifs en voie fondu dans une extrudeuse bi-vis co-rotative WERNER&PLEIFEDER ZSK 40 fonctionnant à 40 kg/h et à une vitesse de 270 trs/min. Les températures de consigne des 8 zones sont respectivement : 245, 255, 255, 255, 255, 260, 260, 270°C. Tous les composants de la formulation sont introduits au début de l'extrudeuse.

Les additifs utilisés sont les suivants :
- Elastomère d'ExxonMobil Chemical de référence EXXELOR VA1801
- Résine phénolique Novolak S de Plastics Production Plant ZTS "ERG" à Pustków S.A.

Les formulations comprennent 4 % d'un mélange de colorant, de stabilisant et de lubrifiant.

Des plaques de dimension 100x100x0,8 mm³ sont injectées sur une machine DEMAG 80 t de diamètre de vis 25 mm pour analyse de la perméabilité (Tbarrel=270°C, Tmoule=85°C, temps de cycle 24,6 s). Avant d'évaluer la perméabilité, les plaques sont séchées à 110°C sous vide pendant une nuit.

Des éprouvettes dites de multifonctions d'épaisseur 4 mm sont injectées pour caractériser les propriétés mécaniques en traction et en impact. Les éprouvettes sont rapidement testées après la mise en oeuvre par injection et sont considérées comme étant sèches (Dry As Molded).

Les formulations ainsi que les propriétés sont regroupées dans le tableau 1 suivant :

| | **CF 1** | **CF2** | **F1** | **F2** | **F3** |
|---|---|---|---|---|---|
| PA 66 type Rhodia 31A00 (IV=170 mL/g) | 71 % | 66 % | - | - | 33 % |
| PA 66/6AlSLi 95/5 (ex. 1) | - | - | 71 % | 66 % | 33 % |
| Elastomère Exxelor VA1801 | 25 % | 25 % | 25 % | 25 % | 25 % |
| Resine phénolique Novolak | - | 5 % | - | 5 % | 5 % |
| Perméabilité E10 à 40°C (g.mm/m².J) | 3,0 | 1,47 | 0,45 | 0* | 0,51 |
| Contrainte en traction à la rupture à 23°C (MPa) - ISO 527/1A | 44 +/-1,0 | 43 +/- 0,3 | 45 +/- 0,3 | 44 +/- 0,4 | 43 +/- 0,5 |
| Module en traction à 23°C (MPa) - ISO 527/1A | 1560 +/- 130 | 1643 +/- 60 | 1552 +/- 63 | 1634 +/- 114 | 1568 +/- 44 |
| Impact Charpy entaillé à 23°C - ISO 179-1/1eA | 106,7 +/- 3 | - | 96 +/- 1,9 | 87 +/- 1,6 | 95 +/- 1,9 |
| Impact Charpy entaillé à -40°C - ISO 179-1/1eA | 29,2 +/- 2,5 | 26 +/- 1,5 | 24 +/- 2,8 | 23 +/- 2,6 | 25 +/- 2,3 |

| | | | | | |
|---|---|---|---|---|---|
| Les % sont exprimés en poids, par rapport au poids total de la composition. 0* : pas de perméation après 50 jours. | | | | | |

## Revendications

1. Utilisation d'un (co)polyamide comprenant au moins des monomères aliphatiques et éventuellement des monomères aromatiques, ledit (co)polyamide est modifié par un composé sulfonate, pour la réalisation d'articles ayant des propriétés barrières aux fluides augmentées, lesdits articles étant destinés à contenir ou à transporter un fluide.

2. Utilisation d'un (co)polyamide comprenant au moins des monomères aliphatiques et éventuellement des monomères aromatiques et modifié par un composé sulfonate pour augmenter les propriétés barrières aux fluides d'une composition polyamide.

3. Utilisation selon l'une quelconque des revendications 1 ou 2, **caractérisée en ce que** le composé sulfonaté comprend au moins une fonction S03X ; S03X représentant S03H ou S03M, M étant un groupement qui remplace le proton H+ de S03H pour former un groupe salifié inactif.

4. Utilisation selon l'une quelconque des revendications 1 à 3, **caractérisée en ce que** le composé sulfonaté est un composé aromatique sulfonaté.

5. Utilisation selon l'une quelconque des revendications 1 à 4, **caractérisée en ce que** le composé sulfonaté est lié chimiquement à la chaine polyamide de manière à former une liaison covalente par l'intermédiaire de fonctions pouvant réagir avec les fonctions amines ou acides carboxyliques des monomères du polyamide telles les fonctions amine, acide carboxylique, aldéhyde, anhydride, hydroxyle, cétone ou leurs dérivés.

6. Utilisation selon l'une quelconque des revendications 1 à 5, **caractérisée en ce que** le composé sulfonaté est placé dans la chaine polymère du polyamide ou alors en bout de chaine du polyamide.

7. Utilisation selon l'une quelconque des revendications 1 à 6, **caractérisée en ce que** le composé sulfonaté est représenté par la formule générale (I):
**(Z)ₙ-Y-(SO₃X)ₘ** **(I)**
dans laquelle :
- S03X représente S03H ou S03M ; M étant un groupement qui remplace le proton H+ de S03H pour former un groupe salifié inactif ;
- m est compris entre 1 et 10 ;
- Y est un radical hydrocarboné comprenant de 2 à 100 atomes de carbone, linéaire ou cyclique, aromatique ou aliphatique et pouvant comprendre des hétéroatomes ;
- Z est une fonction pouvant réagir avec les fonctions amines ou acides carboxyliques des monomères du polyamide ;
- n est compris entre 1 et 10.

8. Utilisation selon l'une quelconque des revendications 1 à 7, **caractérisée en ce que** le composé sulfonaté est choisi parmi le groupe comprenant : l'acide sodium 5-sulfoisophthalique, l'acide lithium 5-sulfoisophtalique, le sodium-4-carboxybenzène sulfonate, le sodium-3-carboxybenzène sulfonate, le sodium- 2-carboxybenzène sulfonate, le lithium-3-carboxybenzène sulfonate le potassium-3-carboxybenzène sulfonate, le sodium-3-carbomethoxybenzène sulfonate, le potassium-2-carbopropoxybenzène sulfonate, le sodium-2-carbométhoxyéthylbenzène sulfonate, le potassium-3-aminométhylbenzène sulfonate, le sodium-2-aminoéthylbenzène sulfonate et le potassium-3- aminopropylbenzène sulfonate.

9. Utilisation selon l'une quelconque des revendications 1 à 8, **caractérisée en ce que** le polyamide modifié est un polyamide choisi dans le groupe comprenant les polyamides de type polyamide 6, polyamide 66, polyamide 10, polyamide 11, le polyamide 610, le polyamide 1010, le polyamide 12, le polyamide 61, les copolyamides 66/6T, 66/61, 6T/MT, et 6T/61.

10. Utilisation selon l'une quelconque des revendications 1 à 9, **caractérisée en ce que** le polyamide modifié est compris dans une composition comprenant de 30 à 95 % en poids dudit polyamide, par rapport au poids total de la composition.

11. Utilisation selon l'une quelconque des revendications 1 à 10, **caractérisée en ce que** le polyamide modifié est compris dans une composition comprenant une résine novolaque.

12. Utilisation selon l'une quelconque des revendications 1 à 11, **caractérisée en ce que** le polyamide modifié est compris dans une composition comprenant un agent modifiant la résistance aux chocs.

13. Utilisation selon l'une quelconque des revendications 1 à 11, **caractérisée en ce que** le polyamide modifié est compris dans une composition déposée ou associée avec un autre substrat.

14. Utilisation selon l'une quelconque des revendications 1 et 3 à 13, **caractérisée en ce que** l'article ayant des propriétés barrières aux fluides augmentées est un article multicouche.

## Patentansprüche

1. Verwendung eines (Co)polyamids, das mindestens aliphatische Monomere und gegebenenfalls aromatische Monomere umfasst, wobei das (Co)polyamid durch eine Sulfonatverbindung modifiziert ist, zur Herstellung von Gegenständen mit verbesserten Fluidbarriereeigenschaften, wobei die Gegenstände zur Aufnahme oder zum Transport eines Fluids bestimmt sind.

2. Verwendung eines (Co)polyamids, das mindestens aliphatische Monomere und gegebenenfalls aromatische Monomere umfasst und durch eine Sulfonatverbindung modifiziert ist, zur Verbesserung der Fluidbarriereeigenschaften einer Polyamidzusammensetzung.

3. Verwendung nach einem der Ansprüche 1 oder 2, **dadurch gekennzeichnet, dass** die Sulfonatverbindung mindestens eine SO₃X-Funktion umfasst; wobei SO₃X für SO₃H oder SO₃M steht, wobei M für eine Gruppe steht, die das Proton H⁺ von SO₃H ersetzt, so dass sich eine inaktive versalzte Gruppe ergibt.

4. Verwendung nach einem der Ansprüche 1 bis 3, **dadurch gekennzeichnet, dass** es sich bei der Sulfonatverbindung um eine aromatische Sulfonatverbindung handelt.

5. Verwendung nach einem der Ansprüche 1 bis 4, **dadurch gekennzeichnet, dass** die Sulfonatverbindung chemisch an die Polyamidkette gebunden ist, so dass sich eine kovalente Bindung über Funktionen, die mit den Amin- oder Carbonsäurefunktionen in den Polyamid-Monomeren reagieren können, wie Amin-, Carbonsäure-, Aldehyd-, Anhydrid-, Hydroxyl- oder Ketonfunktionen oder Derivate davon, ergibt.

6. Verwendung nach einem der Ansprüche 1 bis 5, **dadurch gekennzeichnet, dass** sich die Sulfonatverbindung in der Polymerkette des Polyamids oder am Ende der Polyamidkette befindet.

7. Verwendung nach einem der Ansprüche 1 bis 6, **dadurch gekennzeichnet, dass** die Sulfonatverbindung durch die allgemeine Formel (I) wiedergegeben wird:
(Z)ₙ-Y-(SO₃X)ₘ (I),
in der:
- SO₃X für SO₃H oder SO₃M steht, wobei M für eine Gruppe steht, die das Proton H⁺ von SO₃H ersetzt, so dass sich eine inaktive versalzte Gruppe ergibt;
- m zwischen 1 und 10 liegt;
- Y ein linearer oder cyclischer, aromatischer oder aliphatischer Kohlenwasserstoffrest mit 2 bis 100 Kohlenstoffatomen, der Heteroatome enthalten kann, ist;
- Z eine Funktion, die mit Amin- oder Carbonsäurefunktionen in den Polyamid-Monomeren reagieren kann, ist;
- n zwischen 1 und 10 liegt.

8. Verwendung nach einem der Ansprüche 1 bis 7, **dadurch gekennzeichnet, dass** die Sulfonatverbindung aus der Gruppe umfassend Natrium-5-sulfoisophthalsäure, Lithium-5-sulfoisophthalsäure, Natrium-4-carboxybenzolsulfonat, Natrium-3-carboxybenzolsulfonat, Natrium-2-carboxybenzolsulfonat, Lithium-3-carboxybenzolsulfonat, Kalium-3-carboxybenzolsulfonat, Natrium-3-carbomethoxybenzolsulfonat, Kalium-2-carbopropoxybenzolsulfonat, Natrium-2-carbomethoxyethylbenzolsulfonat, Kalium-3-aminomethylbenzolsulfonat, Natrium-2-aminoethylbenzolsulfonat und Kalium-3-aminopropylbenzolsulfonat ausgewählt ist.

9. Verwendung nach einem der Ansprüche 1 bis 8, **dadurch gekennzeichnet, dass** es sich bei dem modifizierten Polyamid um ein Polyamid aus der Gruppe umfassend die Polyamide vom Typ Polyamid 6, Polyamid 66, Polyamid 10, Polyamid 11, Polyamid 610, Polyamid 1010, Polyamid 12, Polyamid 61 und die Copolyamide 66/6T, 66/61, 6T/MT und 6T/61 handelt.

10. Verwendung nach einem der Ansprüche 1 bis 9, **dadurch gekennzeichnet, dass** das modifizierte Polyamid in einer Zusammensetzung enthalten ist, die 30 bis 95 Gew.-% des Polyamids, bezogen auf das Gesamtgewicht der Zusammensetzung, umfasst.

11. Verwendung nach einem der Ansprüche 1 bis 10, **dadurch gekennzeichnet, dass** das modifizierte Polyamid in einer Zusammensetzung enthalten ist, die ein Novolakharz umfasst.

12. Verwendung nach einem der Ansprüche 1 bis 11, **dadurch gekennzeichnet, dass** das modifizierte Polyamid in einer Zusammensetzung enthalten ist, die einen Schlagzähigkeitsmodifikator umfasst.

13. Verwendung nach einem der Ansprüche 1 bis 11, **dadurch gekennzeichnet, dass** das modifizierte Polyamid in einer Zusammensetzung enthalten ist, die abgeschieden oder mit einem anderen Substrat assoziiert ist.

14. Verwendung nach einem der Ansprüche 1 und 3 bis 13, **dadurch gekennzeichnet, dass** es sich bei dem Gegenstand mit verbesserten Fluidbarriereeigenschaften um einen mehrschichtigen Gegenstand handelt.

## Claims

1. Use of a (co)polyamide comprising at least aliphatic monomers and optionally aromatic monomers, where said (co)polyamide is modified by a sulfonate compound, to make articles with improved fluid barrier properties, said articles being intended to contain or transport a fluid.

2. Use of a (co)polyamide comprising at least aliphatic monomers and optionally aromatic monomers, and modified by a sulfonate compound, to improve the fluid barrier properties of a polyamide composition.

3. Use according to either one of Claims 1 and 2, **characterized in that** the sulfonate compound comprises at least one SO₃X function; SO₃X representing SO₃H or SO₃M, M being a substituent that replaces the SO₃H proton H+ to form an inactive salified group;

4. Use according to any one of Claims 1 to 3, **characterized in that** the sulfonate compound is an aromatic sulfonate compound.

5. Use according to any one of Claims 1 to 4, **characterized in that** the sulfonate compound is bound chemically to the polyamide chain to form a covalent bond through functions that can react with the amine or carboxylic acid functions in the polyamide monomers such as amine, carboxylic acid, aldehyde, anhydride, hydroxyl, ketone functions or their derivatives.

6. Use according to any one of Claims 1 to 5, **characterized in that** the sulfonate compound is placed in the polymer chain of the polyamide or at the end of the polyamide chain.

7. Use according to any one of Claims 1 to 6, **characterized in that** the sulfonate compound is represented by the general formula (I):
**(Z)ₙ-Y-(SO₃X)ₘ** **(I)**
in which:
- SO₃X represents SO₃H or SO₃M; M being a substituent that replaces the SO₃H proton H+ to form an inactive salified group;
- m is between 1 and 10;
- Y is a hydrocarbon substituent comprising from 2 to 100 carbon atoms, linear or cyclic, aromatic or aliphatic and that may comprise heteroatoms;
- Z is a function that can react with amine or carboxylic acid functions in the polyamide monomers;
- n is between 1 and 10.

8. Use according to any one of Claims 1 to 7, **characterized in that** the sulfonate compound is selected among the group comprising: sodium 5-sulfoisophthalic acid, lithium 5-sulfoisophthalic acid, sodium-4-carboxybenzene sulfonate, sodium-3-carboxybenzene sulfonate, sodium-2-carboxybenzene sulfonate, lithium-3-carboxybenzene sulfonate, potassium-3-carboxybenzene sulfonate, sodium-3-carbomethoxybenzene sulfonate, potassium-2-carbopropoxybenzene sulfonate, sodium-2-carbomethoxyethylbenzene sulfonate, potassium-3-aminomethylbenzene sulfonate, sodium-2-aminoethylbenzene sulfonate and potassium-3-aminopropylbenzene sulfonate.

9. Use according to any one of Claims 1 to 8, **characterized in that** the modified polyamide is a polyamide selected from the group comprising polyamides such as polyamide 6, polyamide 66, polyamide 10, polyamide 11, polyamide 610, polyamide 1010, polyamide 12, polyamide 61, copolyamides 66/6T, 66/61, 6T/MT, and 6T/61.

10. Use according to any one of Claims 1 to 9, **characterized in that** the modified polyamide is comprised in a composition comprising 30 to 95% by weight of said polyamide, relative to the total weight of the composition.

11. Use according to any one of Claims 1 to 10, **characterized in that** the modified polyamide is comprised in a composition comprising a novolac resin.

12. Use according to any one of Claims 1 to 11, **characterized in that** the modified polyamide is comprised in a composition comprising an agent modifying impact strength.

13. Use according to any one of Claims 1 to 11, **characterized in that** the modified polyamide is comprised in a deposited composition or associated with another substrate.

14. Use according to any one of Claims 1 and 3 to 13, **characterized in that** the article having improved fluid barrier properties is a multilayer article.
